(19) Europäisches Patentamt
European Patent Office
Office européen des brevets

(11) EP 3 216 828 A1

# (12) EUROPEAN PATENT APPLICATION

(43) Date of publication:
**13.09.2017 Bulletin 2017/37**

(21) Application number: **17155904.0**

(22) Date of filing: **13.02.2017**

(51) Int Cl.:
***C08L 9/06*** (2006.01) ***B60C 1/00*** (2006.01)
***C08L 25/08*** (2006.01) ***C08L 93/00*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.03.2016 JP 2016043612**

(71) Applicant: **Sumitomo Rubber Industries, Ltd.**
**Kobe-shi,**
**Hyogo-ken 651-0072 (JP)**

(72) Inventors:
- **NAKAJIMA, Hiroki**
  **Kobe-shi, Hyogo 651-0072 (JP)**
- **MIYAZAKI, Tatsuya**
  **Kobe-shi, Hyogo 651-0072 (JP)**

(74) Representative: **Manitz Finsterwald Patentanwälte PartmbB**
**Martin-Greif-Strasse 1**
**80336 München (DE)**

## (54) HIGH PERFORMANCE TIRE

(57) Provided is a high performance tire including a tread formed from a rubber composition which achieves a balanced improvement in grip performance, abrasion resistance, and processability. The present invention relates to a high performance tire including a tread formed from a rubber composition, the rubber composition containing: a rubber component including a styrene-butadiene copolymer (1); a styrene-butadiene copolymer (2); and a hydrogenated terpene aromatic resin, the styrene-butadiene copolymer (1) and the styrene-butadiene copolymer (2) differing in styrene content by 10% by mass or more.

EP 3 216 828 A1

**Description**

TECHNICAL FIELD

The present invention relates to a high performance tire including a tread formed from a rubber composition.

BACKGROUND ART

Treads for high performance tires are required to have grip performance and durability. In particular, treads that show a good balance of excellent grip performance and excellent durability (abrasion resistance), particularly on dry roads, are strongly demanded.

Various efforts have been made to ensure or improve these properties. In particular, widely known techniques for improving grip performance are using as a main component polymer (rubber component) a styrene-butadiene rubber whose styrene content is increased, or adding a liquid polymer.

However, unfortunately, treads containing a styrene-butadiene rubber with increased styrene content as a main component polymer (rubber component) show an increased temperature dependence which can result in deterioration of grip performance during initial running or abrasion resistance. A possible solution to this problem is to blend the rubber with a styrene-butadiene rubber with low styrene content. However, a problem exists in that if the difference in styrene content between the styrene-butadiene rubbers is increased, they are poorly compatible with each other and the resulting vulcanized rubber shows unstable properties.

Although the addition of a liquid polymer is also widely known to improve grip performance, as described above, it is known that if the difference in styrene content from the main component polymer (rubber component) is increased, the polymers show poor compatibility, resulting in adhesion failure due to bleeding during processing or in insufficient abrasion resistance.

Therefore, there has been a need for methods that provide a balanced improvement in grip performance, abrasion resistance, and processability.

Other techniques for improving grip performance have also been proposed, such as incorporating a coumarone resin, petroleum-based resin, phenolic resin, or the like with styrene-butadiene rubber (see e.g. Patent Literature 1). However, such techniques leave room for improvement in achieving a balanced improvement in grip performance, abrasion resistance, and processability.

CITATION LIST

PATENT LITERATURE

Patent Literature 1: JP 2005-350535 A

SUMMARY OF INVENTION

TECHNICAL PROBLEM

The present invention aims to solve the above problems and provide a high performance tire including a tread formed from a rubber composition which achieves a balanced improvement in grip performance, abrasion resistance, and processability.

SOLUTION TO PROBLEM

The present invention relates to a high performance tire, including a tread formed from a rubber composition, the rubber composition containing: a rubber component including a styrene-butadiene copolymer (1); a styrene-butadiene copolymer (2); and a hydrogenated terpene aromatic resin, the styrene-butadiene copolymer (1) and the styrene-butadiene copolymer (2) differing in styrene content by 10% by mass or more.

The styrene-butadiene copolymer (1) is preferably present in an amount of 60% to 100% by mass based on 100% by mass of the rubber component.

The hydrogenated terpene aromatic resin is preferably present in an amount of 1 to 60 parts by mass per 100 parts by mass of the rubber component.

The hydrogenated terpene aromatic resin preferably has a hydroxyl value of 20 mg KOH/g or less.

The hydrogenated terpene aromatic resin preferably has a degree of hydrogenation of 1% to 100%.

The hydrogenated terpene aromatic resin preferably has a softening point of 116°C to 160°C.

The hydrogenated terpene aromatic resin preferably has a hydroxyl value of 0 mg KOH/g.
The high performance tire is preferably a high performance dry tire.

ADVANTAGEOUS EFFECTS OF INVENTION

The rubber composition according to the present invention contains: a rubber component including a styrene-butadiene copolymer (1); a styrene-butadiene copolymer (2); and a hydrogenated terpene aromatic resin, wherein the styrene-butadiene copolymer (1) and the styrene-butadiene copolymer (2) differ in styrene content by 10% by mass or more. Such a rubber composition can achieve a balanced improvement in grip performance, abrasion resistance, and processability. Therefore, a high performance tire including a tread formed from the rubber composition shows a balanced improvement in grip performance and abrasion resistance, particularly on dry roads.

DESCRIPTION OF EMBODIMENTS

The high performance tire of the present invention includes a tread formed from a rubber composition. The rubber composition contains: a rubber component including a styrene-butadiene copolymer (1); a styrene-butadiene copolymer (2) ; and a hydrogenated terpene aromatic resin. The styrene-butadiene copolymer (1) and the styrene-butadiene copolymer (2) differ in styrene content by 10% by mass or more.
As mentioned above, various techniques have been developed to improve grip performance, such as by: using as a main component polymer (rubber component) a styrene-butadiene rubber whose styrene content is increased; blending a styrene-butadiene rubber with high styrene content and a styrene-butadiene rubber with low styrene content; or adding a liquid polymer. Unfortunately, none of these techniques is sufficiently effective for improving abrasion resistance or processability. It has thus been difficult to achieve a balanced improvement in grip performance, abrasion resistance, and processability.
In this context, the present invention uses a blend of styrene-butadiene copolymers differing in styrene content while adding a hydrogenated terpene aromatic resin to improve the compatibility between the styrene-butadiene copolymers, thereby achieving a balanced improvement in grip performance, particularly on dry roads, abrasion resistance, and processability.
The term "grip performance" as used alone herein refers to grip performance during initial running and stable grip performance during running.
The rubber composition in the present invention contains a rubber component including a styrene-butadiene copolymer (1), and a styrene-butadiene copolymer (2). The styrene-butadiene copolymer (1) and the styrene-butadiene copolymer (2) differ in styrene content by 10% by mass or more.
In the present invention, the difference in styrene content between the styrene-butadiene copolymer (1) and the styrene-butadiene copolymer (2) is 10% by mass or more, preferably 12% by mass or more, more preferably 13% by mass or more. It is also preferably 30% by mass or less, more preferably 25% by mass or less, still more preferably 20% by mass or less. A difference of more than 30% by mass tends to lead to reduction in abrasion resistance or processability even though the copolymers are combined with a hydrogenated terpene aromatic resin.
The styrene-butadiene copolymers (1) and (2) each preferably have a styrene content of 10% by mass or more, more preferably 15% by mass or more, still more preferably 20% by mass or more, particularly preferably 25% by mass or more. A styrene content of less than 10% by mass tends not to lead to sufficient grip performance. The styrene content is also preferably 60% by mass or less, more preferably 50% by mass or less, still more preferably 40% by mass or less. A styrene content of more than 60% by mass tends to lead to a decrease in abrasion resistance and also to an increased temperature dependence so that greater changes in properties are caused by temperature changes, with the result that good grip performance cannot be obtained. The styrene contents of the styrene-butadiene copolymers (1) and (2) may be selected within the range indicated above so that the difference in styrene content between the styrene-butadiene copolymer (1) and the styrene-butadiene copolymer (2) is 10% by mass or more.
Herein, the styrene contents of the styrene-butadiene copolymers (1) and (2) are calculated based on $^1$H-NMR analysis.
The styrene-butadiene copolymer (1), which is incorporated as a rubber component, is not particularly limited. Examples include emulsion-polymerized styrene-butadiene rubber (E-SBR) and solution-polymerized styrene-butadiene rubber (S-SBR) . Among these, S-SBR is preferred as it provides a good balance of grip performance and abrasion resistance.
In order to more suitably achieve the effects of the present invention, the degree of oil extension of the styrene-butadiene copolymer (1), namely the amount of extender oil in the styrene-butadiene copolymer (1), is preferably 0 to 50 parts by mass per 100 parts by mass of the rubber solids.
In order to more suitably achieve the effects of the present invention, the styrene-butadiene copolymer (1) preferably has a weight average molecular weight (Mw) of 200, 000 or more, more preferably 250, 000 or more, still

more preferably 300,000 or more, particularly preferably 1,000,000 or more. The Mw is also preferably 2,000,000 or less, more preferably 1,800,000 or less.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The styrene-butadiene copolymer (2) may be incorporated as a rubber component like the styrene-butadiene copolymer (1), or may be a liquid styrene-butadiene copolymer (liquid SBR) that is in the liquid state at a room temperature (25°C).

When the styrene-butadiene copolymer (2) is incorporated as a rubber component like the styrene-butadiene copolymer (1), the styrene-butadiene copolymer (2) is not particularly limited, and examples include emulsion-polymerized styrene-butadiene rubber (E-SBR) and solution-polymerized styrene-butadiene rubber (S-SBR). Among these, S-SBR is preferred as it provides a good balance of grip performance and abrasion resistance.

When the styrene-butadiene copolymer (2) is incorporated as a rubber component, the degree of oil extension of the styrene-butadiene copolymer (2), namely the amount of extender oil in the styrene-butadiene copolymer (2), is preferably 0 to 50 parts by mass per 100 parts by mass of the rubber solids in order to more suitably achieve the effects of the present invention.

When the styrene-butadiene copolymer (2) is incorporated as a rubber component, the weight average molecular weight (Mw) of the styrene-butadiene copolymer (2) is preferably 200,000 or more, more preferably 250, 000 or more, still more preferably 300,000 or more, particularly preferably 400,000 or more, in order to more suitably achieve the effects of the present invention. The Mw is also preferably 2,000,000 or less, more preferably 1,800,000 or less, still more preferably 1,000,000 or less, particularly preferably 700,000 or less.

When the styrene-butadiene copolymer (2) is liquid SBR, the liquid SBR preferably has a polystyrene-equivalent weight average molecular weight (Mw) measured by gel permeation chromatography (GPC) of $1.0 \times 10^3$ to $2.0 \times 10^5$, more preferably $3.0 \times 10^3$ to $1.5 \times 10^4$. When the Mw is less than $1.0 \times 10^3$, abrasion resistance or breaking properties may decrease so that sufficient durability cannot be ensured, while when the Mw is more than $2.0 \times 10^5$, the polymerization solution may have excessively high viscosity leading to deterioration of productivity.

In another suitable embodiment of the present invention, the styrene-butadiene copolymer (2) is hydrogenated liquid SBR obtained by hydrogenation of the liquid SBR, in order to better achieve the effects of the present invention. The hydrogenation reaction can be carried out as described later for the hydrogenation reaction of the hydrogenated terpene aromatic resin.

In order to more suitably achieve the effects of the present invention, the degree of hydrogenation of the hydrogenated liquid SBR is preferably 40% to 100%, and in particular it is more preferably 50% or higher, still more preferably 55% or higher. The upper limit of the degree of hydrogenation is more preferably, for example, 80% or less.

The amount of the styrene-butadiene copolymer (1) based on 100% by mass of the rubber component is preferably 60% to 100% by mass, and is more preferably 70% by mass or more, still more preferably 80% by mass or more, particularly preferably 90% by mass or more. When the amount is less than 60% by mass, grip performance, abrasion resistance, or processability tends not to be sufficiently obtained. In the case where the styrene-butadiene copolymer (2) is liquid SBR, the amount of the styrene-butadiene copolymer (1) may be 100% by mass.

The amount of the rubber component and the amount of the styrene-butadiene copolymer (1) refer to the respective solid contents. In particular, the amount of the rubber component herein refers to the solid rubber content.

When the styrene-butadiene copolymer (2) is incorporated as a rubber component, the amount of the styrene-butadiene copolymer (2) based on 100% by mass of the rubber component is preferably 10% by mass or more, more preferably 15% by mass or more, still more preferably 20% by mass or more. The amount is also preferably 40% by mass or less, more preferably 30% by mass or less, still more preferably 25% by mass or less. When the amount is less than 10% by mass or exceeds 40% by mass, grip performance, abrasion resistance, or processability tends not to be sufficiently obtained.

The amount of the rubber component and the amount of the styrene-butadiene copolymer (2) herein refer to the respective solid contents.

In the case where the styrene-butadiene copolymer (2) is liquid SBR, the amount of the styrene-butadiene copolymer (2) per 100 parts by mass of the rubber component is preferably 20 parts by mass or more, more preferably 25 parts by mass or more. The amount is also preferably 120 parts by mass or less, more preferably 80 parts by mass or less, still more preferably 60 parts by mass or less. When the amount is less than 20 parts by mass, sufficient grip performance tends not to be obtained. With more than 120 parts by mass of the styrene-butadiene copolymer (2), abrasion resistance tends to deteriorate.

Examples of preferred embodiments of combinations of the styrene-butadiene copolymer (1) and the styrene-butadiene copolymer (2) in the present invention are described below. The embodiment [3] described below is one of the most preferred embodiments in the present invention.

[1] An embodiment in which: the styrene-butadiene copolymers (1) and (2) are both incorporated as a rubber component; the difference in styrene content between the styrene-butadiene copolymer (1) and the styrene-butadiene copolymer (2) is 10% by mass or more, preferably 12% by mass or more, more preferably 13% by mass or more, but is preferably 30% by mass or less, more preferably 25% by mass or less, still more preferably 20% by mass or less; the styrene content of the styrene-butadiene copolymer (1) is 25% to 60% by mass, and is preferably 35% by mass or more, more preferably 37% by mass or more, but is preferably 50% by mass or less, more preferably 45% by mass or less; the styrene content of the styrene-butadiene copolymer (2) is 10% to 30% by mass, and is preferably 15% by mass or more, more preferably 20% by mass or more, but is preferably 27% by mass or less; the amount of the styrene-butadiene copolymer (1) based on 100% by mass of the rubber component is 60% to 90% by mass, and is preferably 70% by mass or more, more preferably 75% by mass or more, but is preferably 85% by mass or less, more preferably 80% by mass or less; and the amount of the styrene-butadiene copolymer (2) based on 100% by mass of the rubber component is 10% to 40% by mass, and is preferably 15% by mass or more, more preferably 20% by mass or more, but is preferably 30% by mass or less, more preferably 25% by mass or less, provided that the amount of the rubber component, the amount of the styrene-butadiene copolymer (1), and the amount of the styrene-butadiene copolymer (2) refer to the respective solid contents.

[2] An embodiment in which: the styrene-butadiene copolymer (1) is incorporated as a rubber component, while the styrene-butadiene copolymer (2) is liquid SBR, preferably hydrogenated liquid SBR; the difference in styrene content between the styrene-butadiene copolymer (1) and the styrene-butadiene copolymer (2) is 10% by mass or more, preferably 12% by mass or more, more preferably 15% by mass or more, but is preferably 30% by mass or less, more preferably 25% by mass or less, still more preferably 20% by mass or less; the styrene content of the styrene-butadiene copolymer (1) is 25% to 60% by mass, and is preferably 35% by mass or more, more preferably 37% by mass or more, but is preferably 50% by mass or less, more preferably 45% by mass or less; the styrene content of the styrene-butadiene copolymer (2) is 10% to 30% by mass, and is preferably 15% by mass or more, more preferably 20% by mass or more, but is preferably 27% by mass or less, more preferably 25% by mass or less; the amount of the styrene-butadiene copolymer (1) based on 100% by mass of the rubber component is 60% to 100% by mass, and is preferably 70% by mass or more, more preferably 75% by mass or more, still more preferably 80% by mass or more, particularly preferably 100% by mass; and the amount of the styrene-butadiene copolymer (2) per 100 parts by mass of the rubber component is 20 to 120 parts by mass, and is preferably 25 parts by mass or more, more preferably 28 parts by mass or more, but is preferably 80 parts by mass or less, more preferably 60 parts by mass or less, provided that the amount of the rubber component and the amount of the styrene-butadiene copolymer (1) refer to the respective solid contents.

[3] An embodiment in which: the styrene-butadiene copolymer (1) is incorporated as a rubber component, while the styrene-butadiene copolymer (2) is a combination of a styrene-butadiene copolymer incorporated as a rubber component and liquid SBR, preferably hydrogenated liquid SBR; the difference in styrene content between the styrene-butadiene copolymer (1) and the styrene-butadiene copolymer (2) is 10% by mass or more, preferably 12% by mass or more, more preferably 13% by mass or more, but is preferably 30% by mass or less, more preferably 25% by mass or less, still more preferably 20% by mass or less; the styrene content of the styrene-butadiene copolymer (1) is 25% to 60% by mass, and is preferably 35% by mass or more, more preferably 37% by mass or more, but is preferably 50% by mass or less, more preferably 45% by mass or less; the styrene content of the styrene-butadiene copolymer (2) is 10% to 30% by mass, and is preferably 15% by mass or more, more preferably 20% by mass or more, but is preferably 27% by mass or less; the amount of the styrene-butadiene copolymer (1) based on 100% by mass of the rubber component is 60% to 90% by mass, and is preferably 70% by mass or more, more preferably 75% by mass or more, but is preferably 85% by mass or less, more preferably 80% by mass or less; the amount of the styrene-butadiene copolymer (2) incorporated as a rubber component, based on 100% by mass of the rubber component, is 10% to 40% by mass, and is preferably 15% by mass or more, more preferably 20% by mass or more, but is preferably 30% by mass or less, more preferably 25% by mass or less; and the amount of the styrene-butadiene copolymer (2) which is liquid SBR, per 100 parts by mass of the rubber component, is 20 to 120 parts by mass, and is preferably 30 parts by mass or more, more preferably 33 parts by mass or more, but is preferably 80 parts by mass or less, more preferably 60 parts by mass or less, provided that the amount of the rubber component, the amount of the styrene-butadiene copolymer (1), and the amount of the styrene-butadiene copolymer (2) incorporated as a rubber component refer to the respective solid contents.

In the case of a rubber composition containing three types or more of styrene-butadiene copolymers and a hydrogenated terpene aromatic resin, the rubber composition corresponds to the rubber composition in the present invention if at least one pair of the styrene-butadiene copolymers consists of the styrene-butadiene copolymers (1) and (2).

The rubber component in the present invention may include other rubbers, and examples of other rubbers include diene rubbers such as natural rubber (NR), polyisoprene rubber (IR), polybutadiene rubber (BR), styrene-isoprene-butadiene rubber (SIBR), ethylene-propylene-diene rubber (EPDM), chloroprene rubber (CR), and acrylonitrile-butadiene rubber (NBR), and butyl rubber (IIR). Modified products of these rubbers may be used.

As described above, the rubber component in the present invention may consist only of styrene-butadiene rubber or may include a combination of styrene-butadiene rubber and one or more of the other rubbers mentioned above. In view of grip performance, the rubber component preferably consists only of styrene-butadiene rubber.

The rubber composition in the present invention contains a hydrogenated terpene aromatic resin. The hydrogenated terpene aromatic resin may be used alone or in combinations of two or more.

The term "terpene aromatic resin" used in the hydrogenated terpene aromatic resin refers to a compound obtained by copolymerizing an aromatic compound and a terpene compound by a usual method. Specifically, for example, the compound can be produced by dropwise adding raw materials in any order into an organic solvent such as toluene in the presence of a catalyst such as $BF_3$ and reacting the mixture at a predetermined temperature for a predetermined time.

The ratio of the aromatic compound and the terpene compound copolymerized in the terpene aromatic resin may be selected appropriately so that the resulting hydrogenated terpene aromatic resin has the physical properties described later. The terpene aromatic resin may contain copolymerization units other than the aromatic compound and terpene compound, such as indene, as long as the hydrogenated terpene aromatic resin has the later-described physical properties.

The aromatic compound may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene and styrene derivatives such as alkylstyrenes, alkoxystyrenes, and unsaturated hydrocarbon group-containing styrenes, with styrene derivatives being preferred. The alkyl or alkoxy groups in these compounds each preferably have 1 to 20 carbon atoms, more preferably 1 to 12 carbon atoms. The unsaturated hydrocarbon groups in these compounds each preferably have 2 to 20 carbon atoms, more preferably 2 to 12 carbon atoms.

The aromatic compound may have one substituent or two or more substituents on the aromatic ring. In the case of the aromatic compound having two or more substituents on the aromatic ring, the substituents may be located at any of the ortho, meta, or para positions. Moreover, in the case of a styrene derivative having a substituent on the aromatic ring, the substituent may be at the ortho, meta or para positions with respect to the vinyl group of styrene.

The aromatic compound may be used alone or in combinations of two or more.

Specific examples of the alkylphenols include methylphenol, ethylphenol, butylphenol, t-butylphenol, octylphenol, nonylphenol, decylphenol, and dinonylphenol. They may have the respective substituents at any of the ortho, meta, or para positions. Among these, t-butylphenol is preferred, with p-t-butylphenol being more preferred.

Specific examples of the alkylnaphthols include compounds obtained by replacing the phenol moiety of the alkylphenols by naphthol.

Specific examples of the alkylstyrenes include compounds obtained by replacing the phenol moiety of the alkylphenols by styrene.

Specific examples of the alkoxyphenols include compounds obtained by replacing the alkyl groups of the alkylphenols by the corresponding alkoxy groups. Also, specific examples of the alkoxynaphthols include compounds obtained by replacing the alkyl groups of the alkylnaphthols by the corresponding alkoxy groups. Also, specific examples of the alkoxystyrenes include compounds obtained by replacing the alkyl groups of the alkylstyrenes by the corresponding alkoxy groups.

Examples of the unsaturated hydrocarbon group-containing phenols include compounds which contain at least one hydroxyphenyl group per molecule and in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C20 alkenyl groups.

Specific examples of the unsaturated hydrocarbon group-containing phenols include isopropenylphenol and butenylphenol. Examples of the unsaturated hydrocarbon group-containing naphthols and the unsaturated hydrocarbon group-containing styrenes are similarly described.

The terpene compound includes hydrocarbons represented by the compositional formula $(C_5H_8)_n$ and their oxygen-containing derivatives, each of which has a terpene basic skeleton, classified into monoterpenes ($C_{10}H_{16}$), sesquiterpenes ($C_{15}H_{24}$), diterpenes ($C_{20}H_{32}$), and other terpenes. The terpene compound is not particularly limited, but is preferably a cyclic unsaturated hydrocarbon and also preferably contains no hydroxyl group.

Specific examples of the terpene compound include α-pinene, β-pinene, 3-carene (δ-3-carene), dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Preferred among these are α-pinene, β-pinene, 3-carene (δ-3-carene), dipentene, and limonene, with α-pinene or limonene being more preferred, because they allow for a balanced improvement in grip performance, blowing resistance, fuel economy, and durability. The limonene includes d-limonene, l-limonene, and dl-limonene.

These terpene compounds may be used alone or in combinations of two or more.

Examples of the terpene aromatic resins produced, for example, by copolymerization of limonene with styrene derivatives include compounds represented by the following formula (I):

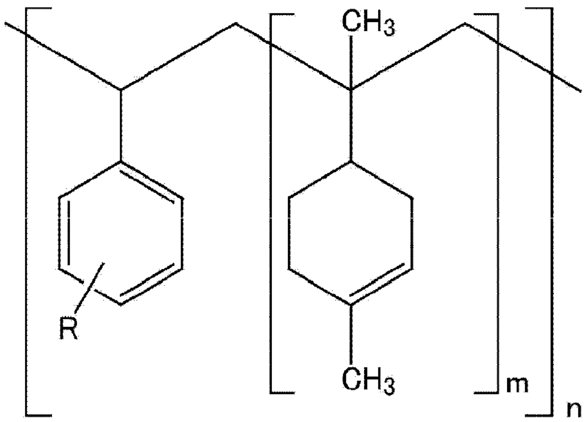

(I)

wherein R represents a substituent on the aromatic ring and is a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

Specific examples of the terpene aromatic resin include YS resin TO125 available from Yasuhara Chemical Co., Ltd.

The hydrogenated terpene aromatic resin used in the present invention may be produced by hydrogenating the double bonds of the above-described terpene aromatic resin by a commonly used method. The hydrogenation may be accomplished, for example, by catalytic hydrogen reduction using as a catalyst a noble metal such as palladium, ruthenium, rhodium, or nickel, either alone or supported on a carrier such as activated carbon, activated alumina, or diatomite.

The amount of the catalyst per 100% by mass of the starting terpene aromatic resin is preferably 0.1% to 50% by mass, more preferably 0.2% to 40% by mass. When the amount is less than 0.1% by mass, the hydrogenation reaction tends to slow down, while when the amount is more than 50% by mass, the catalyst may be left as an impurity which can act as an obstacle to filler dispersion or polymer dispersion, resulting in a failure to achieve sufficient tensile strength or grip performance. The hydrogen pressure of the hydrogenation reaction is typically 5 to 200 kg/$cm^2$, preferably 50 to 100 kg/$cm^2$. If the hydrogen pressure is less than 5 kg/$cm^2$, the reaction rate of the hydrogenation reaction tends to slow down, while if the hydrogen pressure is more than 200 kg/$cm^2$, the reaction equipment may be damaged or become difficult to maintain, resulting in poor productivity. Moreover, the temperature of the hydrogenation reaction is typically 10°C to 200°C, preferably 20°C to 150°C. If the reaction temperature is less than 10°C, the hydrogenation reaction tends to slow down, while if the reaction temperature is more than 200°C, the reaction equipment may be damaged or become difficult to maintain, resulting in poor productivity.

The hydrogenated terpene aromatic resin may be a commercial product such as YS polyster M125 available from Yasuhara Chemical Co., Ltd.

The hydrogenated terpene aromatic resin of the present invention prepared as above contains hydrogenated double bonds. In particular, the hydrogenated terpene aromatic resin is preferably one obtained by selectively hydrogenating the double bonds other than those of the aromatic ring of a terpene aromatic resin.

The hydrogenated terpene aromatic resin preferably has a degree of hydrogenation of 1% to 100%. In particular, the degree of hydrogenation is more preferably 2% or higher, still more preferably 5% or higher, further preferably 8% or higher, particularly preferably 11% or higher. The upper limit of the degree of hydrogenation is more preferably, for example, 80% or lower, still more preferably 60% or lower, further preferably 40% or lower, particularly preferably 30% or lower, most preferably 25% or lower. If the degree of hydrogenation is lower than 1%, grip performance or abrasion resistance may not be sufficiently improved.

Herein, the degree of hydrogenation (hydrogenation ratio) is calculated from the integrals of the double bond peaks determined by $^1$H-NMR (proton NMR) according to the equation below. The degree of hydrogenation (hydrogenation ratio) herein refers to the percentage of hydrogenated double bonds.

$$\text{(Hydrogenation ratio (\%))} = ((A - B)/A) \times 100$$

where

A: the integral of the double bond peaks before hydrogenation;
B: the integral of the double bond peaks after hydrogenation.

For example, when the terpene aromatic resin used is a compound of formula (I) obtained by copolymerization of a styrene derivative and limonene, if the degree of hydrogenation is set to 100%, then a hydrogenated terpene aromatic resin represented by the formula (II) below will be obtained, while if the degree of hydrogenation is at least 1% but less than 100%, then, for example, a hydrogenated terpene aromatic resin represented by the formula (III) below will be obtained.

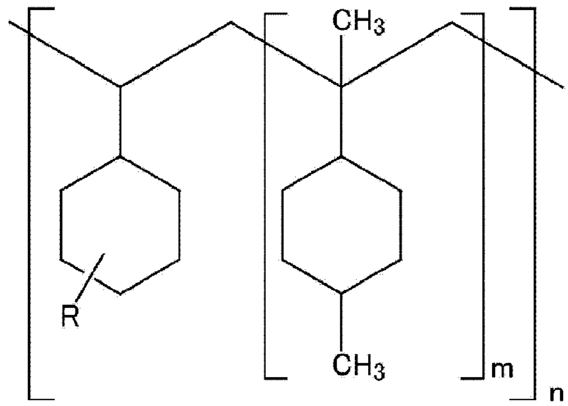

(II)

In formula (II), R, which is a substituent on the cyclohexane ring, represents a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

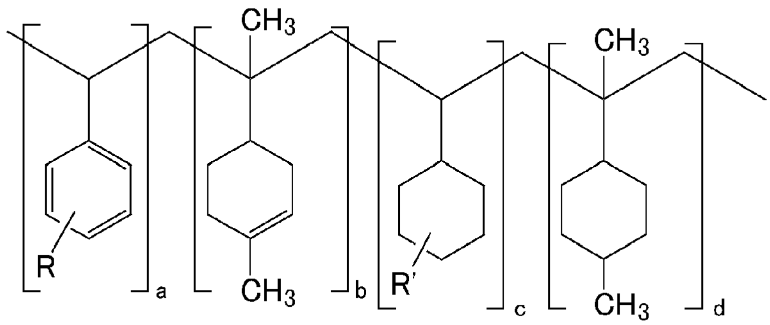

(III)

In formula (III), R, which is a substituent on the aromatic ring, represents a C1-C20 alkyl group, a C1-C20 alkoxy group, or a C2-C20 unsaturated hydrocarbon group, while R', which is a substituent on the cyclohexane ring, represents a C1-C20 alkyl group, a C1-C20 alkoxy group, or a C2-C20 unsaturated hydrocarbon group, provided that the number of substituents R or R' may be 1 to 5, and when the number of substituents is two or more, the substituents may be the same as or different from each other and may also be located in any position; a, b, c, and d each represent the number of repeating units, and the repeating units may be linked in any order and may be arranged in blocks, in an alternating manner, or randomly.

Preferred embodiments of the hydrogenated terpene aromatic resin may also be described as, for example, resins containing repeating units of formula (II) containing a cyclohexyl group, provided that the resins may contain in the structure at least one repeating unit selected from the group consisting of repeating units of formula (I) and repeating units represented by the formula (IV) below. The repeating units may be linked in any order and may be arranged in blocks, in an alternating manner, or randomly.

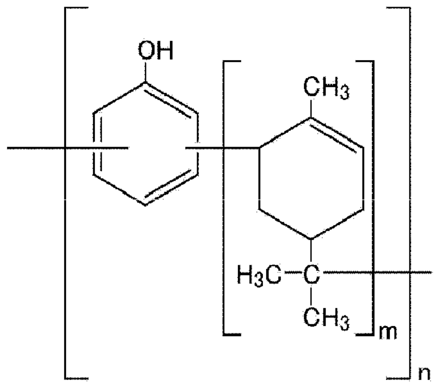

(IV)

In formula (IV), m and n each represent the number of repeating units.

The hydrogenated terpene aromatic resin preferably has a hydroxyl value (i.e., corresponding to phenol group content) of 20 mg KOH/g or less, more preferably 10 mg KOH/g or less, still more preferably 5 mg KOH/g or less, further preferably 1 mg KOH/g or less, particularly preferably 0.1 mg KOH/g or less. Especially preferably, the hydroxyl value is 0 mg KOH/g. The hydrogenated terpene aromatic resin having a hydroxyl value of more than 20 mg KOH/g may show higher self-aggregation tendency and thus lower affinity for rubber and filler, resulting in insufficient grip performance.

The hydroxyl value of the hydrogenated terpene aromatic resin refers to the amount in milligrams of potassium hydroxide required to neutralize the acetic acid which combines with hydroxyl groups on acetylation of 1 g of the hydrogenated terpene aromatic resin, and is measured by potentiometric titration (JIS K 0070:1992).

The hydrogenated terpene aromatic resin preferably has a softening point of 116°C to 160°C. The softening point is more preferably 120°C or higher, still more preferably 123°C or higher, but is more preferably 140°C or lower, still more preferably 130°C or lower. The hydrogenated terpene aromatic resin having a softening point of lower than 116°C tends not to provide sufficient grip performance, while the hydrogenated terpene aromatic resin having a softening point of higher than 160°C can remain unmelted if the rubber temperature during kneading does not exceed the softening point, thereby failing to provide good grip performance and good abrasion resistance.

Herein, the softening point of the hydrogenated terpene aromatic resin is determined in conformity with JIS K 6220-1:2001 with a ring and ball softening point measuring apparatus and is defined as the temperature at which the ball drops down.

The hydrogenated terpene aromatic resin preferably has a glass transition temperature (Tg) of 20°C or higher, more preferably 30°C or higher, still more preferably 40°C or higher. The Tg is preferably 100°C or lower, more preferably 90°C or lower, still more preferably 80°C or lower.

Herein, the glass transition temperature of the hydrogenated terpene aromatic resin is measured by differential scanning calorimetry (DSC) at a rate of temperature rise of 10°C/min in conformity with JIS K 7121.

The hydrogenated terpene aromatic resin preferably has a weight average molecular weight (Mw) of 300 to 3,000, more preferably 500 to 2,000, still more preferably 600 to 2,000, though not limited thereto. A Mw of less than 300 tends not to lead to sufficient grip performance, while a Mw of more than 3, 000 tends to lead to an increase in rubber hardness, resulting in insufficient grip performance or processability.

The rubber composition in the present invention preferably contains 1 to 60 parts by mass of the hydrogenated terpene aromatic resin per 100 parts by mass of the rubber component. The amount of the hydrogenated terpene aromatic resin is more preferably 2 parts by mass or more, still more preferably 5 parts by mass or more, further preferably 10 parts by mass or more, particularly preferably 20 parts by mass or more. The amount is also more preferably 50 parts by mass or less, still more preferably 45 parts by mass or less, further preferably 40 parts by mass or less. When the amount is less than 1 part by mass, sufficient grip performance may not be obtained. With more than 60 parts by mass of the hydrogenated terpene aromatic resin, temperature dependence may deteriorate, with the result that good grip performance during initial running may not be obtained.

The rubber composition in the present invention may incorporate any reinforcing filler selected from conventionally used fillers for rubber compositions for tires, such as carbon black, silica, calcium carbonate, alumina, clay, and talc. Particularly in view of reinforcing properties, grip performance, and abrasion resistance, it is preferred to incorporate carbon black.

Examples of the carbon black include those produced by oil furnace processes. Two types or more of carbon black with different colloidal properties may be used in combination. Specific examples include GPF, HAF, ISAF, and SAF, with ISAF, ISAF-LS, and SAF being suitable.

The carbon black preferably has a nitrogen adsorption specific surface area ($N_2SA$) of 80 $m^2/g$ or more, more preferably 100 $m^2/g$ or more. The $N_2SA$ is also preferably 600 $m^2/g$ or less, more preferably 250 $m^2/g$ or less, still more

preferably 180 $m^2/g$ or less, particularly preferably 125 $m^2/g$ or less. A $N_2SA$ of less than 80 $m^2/g$ tends to lead to a decrease in grip performance. Carbon black having a $N_2SA$ of more than 600 $m^2/g$ is less likely to disperse well, resulting in a decrease in abrasion resistance. The $N_2SA$ of the carbon black is determined by the BET method in conformity with JIS K 6217-2:2001.

The carbon black preferably has an oil absorption number (OAN) of 50 mL/100 g or more, more preferably 75 mL/100 g or more. The OAN is also preferably 250 mL/100 g or less, more preferably 200 mL/100 g or less, still more preferably 135 mL/100 g or less. An OAN of less than 50 mL/100 g may not lead to sufficient abrasion resistance. An OAN of more than 250 mL/100 g may lead to a decrease in grip performance.

Herein, the OAN of the carbon black is measured in conformity with JIS K 6217-4:2008.

When carbon black is incorporated, the amount of the carbon black per 100 parts by mass of the rubber component is preferably 50 parts by mass or more, more preferably 80 parts by mass or more, still more preferably 100 parts by mass or more. The amount is also preferably 200 parts by mass or less, more preferably 180 parts by mass or less. When the amount is less than 50 parts by mass, sufficient grip performance or abrasion resistance may not be obtained. With more than 200 parts by mass of carbon black, grip performance may decrease.

In view of grip performance, the rubber composition in the present invention may further incorporate a softening agent.

Any softening agent may be used, and examples include oil, liquid diene polymers excluding the liquid SBR, and resins having a softening point of 160°C or lower excluding the hydrogenated terpene aromatic resins. Among these, oil is preferred as the softening agent. These softening agents may be used alone or in combinations of two or more.

The rubber composition in the present invention preferably further incorporates a softening agent, particularly when the styrene-butadiene copolymer (2) is incorporated as a rubber component.

When a softening agent is incorporated, the amount of the softening agent per 100 parts by mass of the rubber component is preferably 15 parts by mass or more, more preferably 20 parts by mass or more, still more preferably 25 parts by mass or more. The amount is also preferably 120 parts by mass or less, more preferably 85 parts by mass or less, still more preferably 80 parts by mass or less, further preferably 75 parts by mass or less, particularly preferably 60 parts by mass or less. When the amount is less than 15 parts by mass, the added softening agent may produce no effect. An amount of more than 120 parts by mass tends to deteriorate abrasion resistance.

Examples of the oil include process oils such as paraffinic process oils, aromatic process oils, and naphthenic process oils, with aromatic process oils being preferred.

When oil is incorporated, the amount of the oil per 100 parts by mass of the rubber component is preferably 15 parts by mass or more, more preferably 25 parts by mass or more. The amount is also preferably 85 parts by mass or less, more preferably 75 parts by mass or less. When the amount is less than 15 parts by mass, the added oil may produce no effect. An amount of more than 85 parts by mass tends to deteriorate abrasion resistance.

The amount of the oil herein includes the amount of oil contained in oil-extended rubber.

Liquid diene polymers excluding the liquid SBR refer to diene polymers that are in the liquid state at a room temperature (25°C). The liquid diene polymer preferably has a polystyrene-equivalent weight average molecular weight (Mw) measured by gel permeation chromatography (GPC) of $1.0 \times 10^3$ to $2.0 \times 10^5$, more preferably $3.0 \times 10^3$ to $1.5 \times 10^4$. When the Mw is less than $1.0 \times 10^3$, abrasion resistance or breaking properties may decrease so that sufficient durability cannot be ensured, while when the Mw is more than $2.0 \times 10^5$, the polymerization solution may have excessively high viscosity leading to deterioration of productivity.

Examples of the liquid diene polymers excluding the liquid SBR include liquid polybutadiene (liquid BR), liquid polyisoprene (liquid IR), and liquid styrene-isoprene copolymers (liquid SIR).

When at least one of the liquid diene polymers excluding the liquid SBR is incorporated, the amount of the liquid diene polymer per 100 parts by mass of the rubber component is preferably 20 parts by mass or more, more preferably 30 parts by mass or more. The amount is also preferably 120 parts by mass or less, more preferably 80 parts by mass or less, still more preferably 60 parts by mass or less. An amount of less than 20 parts by mass tends not to provide sufficient grip performance. An amount of more than 120 parts by mass tends to deteriorate abrasion resistance.

Examples of the resins having a softening point of 160°C or lower excluding the hydrogenated terpene aromatic resins include coumarone-indene resins, $\alpha$-methylstyrene-based resins, terpene-based resins, and p-t-butylphenol acetylene resins.

The softening point of the resin having softening point of 160°C or lower can be determined as described above for the softening point of the hydrogenated terpene aromatic resin.

The rubber composition according to the present invention may appropriately incorporate, in addition to the above-described components, compounding agents commonly used in the tire industry, such as wax, zinc oxide, antioxidants, vulcanizing agents, e.g. sulfur, and vulcanization accelerators.

Any type of zinc oxide may be used in the present invention, including those used in the rubber field such as in tires. In order to more suitably achieve the effects of the present invention, the zinc oxide may suitably be finely divided zinc oxide. Specifically, the zinc oxide preferably has an average primary particle size of 200 nm or smaller, more

preferably 100 nm or smaller, still more preferably 80 nm or smaller. The lower limit of the average primary particle size is not particularly limited, but is preferably 20 nm or larger, more preferably 30 nm or larger.

The average primary particle size of the zinc oxide refers to an average particle size (average primary particle size) calculated from the specific surface area determined by the BET method based on nitrogen adsorption.

When zinc oxide is incorporated, the amount of the zinc oxide per 100 parts by mass of the rubber component is preferably 0.5 to 10 parts by mass, more preferably 1 to 5 parts by mass. When the amount of the zinc oxide falls within the range indicated above, the effects of the present invention can be more suitably achieved.

Examples of the vulcanization accelerator include sulfenamide vulcanization accelerators, thiazole vulcanization accelerators, thiuram vulcanization accelerators, guanidine vulcanization accelerators, and dithiocarbamate vulcanization accelerators. In the present invention, sulfenamide vulcanization accelerators and dithiocarbamate vulcanization accelerators, among others, can be suitably used. In particularly suitable embodiments, combinations of sulfenamide vulcanization accelerators and dithiocarbamate vulcanization accelerators are used.

Examples of sulfenamide vulcanization accelerators include N-tert-butyl-2-benzothiazolylsulfenamide (NS), N-cyclohexyl-2-benzothiazolylsulfenamide (CZ), and N-oxydiethylene-2-benzothiazolylsulfenamide (MSA), with NS or CZ being preferred, with NS being particularly preferred.

Examples of dithiocarbamate vulcanization accelerators include zinc dibenzyldithiocarbamate (ZTC), zinc dimethyldithiocarbamate (PZ), zinc N-pentamethylenedithiocarbamate (ZP), and sodium dibutyldithiocarbamate (TP), with ZTC being preferred.

When a vulcanization accelerator is incorporated, the amount of the vulcanization accelerator per 100 parts by mass of the rubber component is preferably 1 part by mass or more, more preferably 3 parts by mass or more, but is preferably 15 parts by mass or less, more preferably 10 parts by mass or less. An amount of less than 1 part by mass tends not to provide a sufficient cure rate, with the result that good grip performance or abrasion resistance tends not to be obtained. An amount of more than 15 parts by mass may cause blooms, deteriorating grip performance or abrasion resistance.

The vulcanizing agent to be used in the present invention is preferably sulfur.

The amount of the vulcanizing agent per 100 parts by mass of the rubber component is preferably 0.5 parts by mass or more, more preferably 0.7 parts by mass or more, but is preferably 3 parts by mass or less, more preferably 2 parts by mass or less, still more preferably 1 part by mass or less. An amount of less than 0.5 parts by mass may not achieve good cure reaction, thereby resulting in a decrease in abrasion resistance. An amount of more than 3 parts by mass may cause blooms, deteriorating good grip performance or abrasion resistance.

The rubber composition in the present invention can be prepared by conventional methods. Specifically, for example, the rubber composition may be prepared by kneading the above-described components with a Banbury mixer, a kneader, an open roll mill, or other devices, and vulcanizing the kneadate. The rubber composition is used in treads of high performance tires.

The high performance tire of the present invention can be formed from the rubber composition by usual methods. Specifically, an unvulcanized rubber composition that incorporates a rubber component including a styrene-butadiene copolymer (1), a styrene-butadiene copolymer (2), and a hydrogenated terpene aromatic resin, and optionally various compounding agents mentioned above is extruded into the shape of a tread and assembled with other tire components by a usual method on a tire building machine to build an unvulcanized tire. The unvulcanized tire is heat-pressed in a vulcanizer to produce a high performance tire of the present invention.

The high performance tire of the present invention can be suitably used as high performance dry tires.

Herein, high performance tires refer to tires that are excellent especially in grip performance, and conceptually include racing tires used in racing vehicles.

High performance dry tires herein refer to tires that are excellent especially in dry grip performance.

## EXAMPLES

The present invention is specifically described with reference to, but not limited to, examples below.

The chemicals used in the examples and comparative examples are listed below.

SBR 1: Tufdene 4850 (S-SBR, styrene content: 40% by mass, oil content per 100 parts by mass of rubber solids: 50 parts by mass, Mw: $11.3 \times 10^5$) available from Asahi Kasei Corporation

SBR 2: Y031 (S-SBR, styrene content: 27% by mass, oil content per 100 parts by mass of rubber solids: 0 parts by mass, Mw: $4.48 \times 10^5$) available from Asahi Kasei Corporation

Carbon black: N219 ($N_2SA$: 106 $m^2/g$, OAN: 75 mL/100 g) available from Cabot Japan K.K.

Oil: Diana Process AH-24 (aromatic process oil) available from Idemitsu Kosan Co., Ltd.

Liquid diene copolymer: RICON 100 (liquid SBR, styrene content: 25% by mass, Mw: 4500) available from Sartomer

Hydrogenated liquid diene copolymer: partially hydrogenated product of RICON 100 available from Sartomer (hydrogenated liquid SBR, degree of hydrogenation: 60%) prepared in Production Example 1 described below
Terpene aromatic resin: YS resin TO125 (degree of hydrogenation: 0%, softening point: 125°C) available from Yasuhara Chemical Co., Ltd.
Hydrogenated terpene aromatic resin: YS polyster M125 (degree of hydrogenation: 11%, softening point: 125°C, Tg: 69°C, hydroxyl value: 0 mg KOH/g) available from Yasuhara Chemical Co., Ltd.
Zinc oxide: ZINCOX SUPER F-2 (average primary particle size: 65 nm) available from HakusuiTech Co., Ltd.
Wax: SUNNOC N available from Ouchi Shinko Chemical Industrial Co., Ltd.
Antioxidant 1: NOCRAC 6C (N-phenyl-N'-(1,3-dimethylbutyl)-p-phenylenediamine) available from Ouchi Shinko Chemical Industrial Co., Ltd.
Antioxidant 2: NOCRAC RD (poly(2,2,4-trimethyl-1,2-dihydroquinoline)) available from Ouchi Shinko Chemical Industrial Co., Ltd.
Stearic acid: stearic acid "TSUBAKI" available from NOF Corporation
Sulfur: sulfur powder available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.
Vulcanization accelerator 2: NOCCELER ZTC (zinc dibenzyldithiocarbamate) available from Ouchi Shinko Chemical Industrial Co., Ltd.

(Production Example 1)

(Preparation of hydrogenated liquid SBR)

To a 3 L autoclave provided with a stirrer were added 80 g of "RICON 100 (liquid SBR)" and 5 g of 10% palladium carbon (available from Tokyo Chemical Industry Co., Ltd.). Then, the autoclave was purged with nitrogen and subsequently with hydrogen to give a pressure of 5.0 kg/cm$^2$, followed by hydrogenation at 80°C to obtain a hydrogenated liquid SBR.

<Examples and Comparative Examples>

According to the formulations shown in Table 1, the materials excluding the sulfur and vulcanization accelerators were kneaded with a 1.7 L Banbury mixer (available from Kobe Steel Ltd.). The sulfur and vulcanization accelerators were added to the kneadate and they were kneaded with an open roll mill to obtain an unvulcanized rubber composition. The unvulcanized rubber composition was formed into the shape of a tread and assembled with other tire components on a tire building machine, followed by vulcanization at 150°C for 30 minutes to obtain a test tire (tire size: 215/45R17).
The test tires prepared as above were evaluated on the items below. Table 1 shows the results.
Processability was evaluated by visually observing whether bleeding occurred or not during the period from the forming into the shape of a tread to the assembling with other tire components on a tire building machine.

(Initial grip performance)

The test tires were mounted on a front-engine, rear-wheel-drive car with of 2000 cc displacement made in Japan. A test driver drove the car 10 laps around a test track under dry asphalt surface conditions and then evaluated the stability of steering control on the second lap. The results are expressed as an index (initial grip performance index), with Comparative Example 1 set equal to 100. A higher index indicates higher initial grip performance. Tires with an index of 110 or higher are considered to have particularly good initial grip performance.

(Grip performance during running)

The test tires were mounted on a front-engine, rear-wheel-drive car of 2000 cc displacement made in Japan. A test driver drove the car 10 laps around a test track under dry asphalt surface conditions and then compared the stability of steering control on the lap with the best lap time with that on the final lap for evaluation. The results are expressed as an index, with Comparative Example 1 set equal to 100. A higher index indicates a smaller deterioration in grip performance on dry roads during running, which means that stable grip performance during running is well achieved. Tires with an index of 110 or higher are considered to have particularly good grip performance.

(Abrasion resistance)

The test tires were mounted on a front-engine, rear-wheel-drive car of 2000 cc displacement made in Japan.

A test driver drove the car on a test track under dry asphalt surface conditions. Then, the remaining groove depth in the tire tread rubber (initial depth: 15 mm) was measured and expressed as an index (abrasion resistance index), with Comparative Example 1 set equal to 100. A higher index indicates higher abrasion resistance. Tires with an index of 110 or higher are considered to have good abrasion resistance.

[Table 1]

| | | Comparative Example | | | | | | | Example | | |
|---|---|---|---|---|---|---|---|---|---|---|---|
| | | 1 | 2 | 3 | 4 | 5 | 6 | 7 | 1 | 2 | 3 |
| Formulation (parts by mass) | SBR 1 | 150 | – | 75 | 120 | 120 | 120 | 120 | 120 | 150 | 120 |
| | SBR 2 | – | 100 | 50 | 20 | 20 | 20 | 20 | 20 | – | 20 |
| | Carbon black | 130 | 130 | 130 | 130 | 130 | 130 | 130 | 130 | 130 | 130 |
| | Oil | 57.5 | 107.5 | 82.5 | 67.5 | – | – | – | 33.75 | – | – |
| | Liquid diene copolymer | – | – | – | – | 67.5 | – | – | – | – | – |
| | Hydrogenated liquid diene copolymer | – | – | – | – | – | 67.5 | 33.75 | – | 28.75 | 33.75 |
| | Terpene aromatic resin | – | – | – | – | – | – | 33.75 | – | – | – |
| | Hydrogenated terpene aromatic resin | – | – | – | – | – | – | – | 33.75 | 28.75 | 33.75 |
| | Zinc oxide | 2 | 2 | 2 | 2 | 2 | 2 | 2 | 2 | 2 | 2 |
| | Wax | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 |
| | Sulfur | 0.8 | 0.8 | 0.8 | 0.8 | 0.8 | 0.8 | 0.8 | 0.8 | 0.8 | 0.8 |
| | Vulcanization accelerator 1 | 4 | 4 | 4 | 4 | 4 | 4 | 4 | 4 | 4 | 4 |
| | Vulcanization accelerator 2 | 3 | 3 | 3 | 3 | 3 | 3 | 3 | 3 | 3 | 3 |
| Evaluation | Bleeding | Not observed | Not observed | Not observed | Not observed | Not observed | Observed | Not observed | Not observed | Not observed | Not observed |
| | Initial grip performance | 100 | 105 | 106 | 103 | 115 | 112 | 113 | 115 | 123 | 136 |
| | Grip performance throughout running | 100 | 80 | 90 | 95 | 113 | 120 | 113 | 116 | 124 | 120 |
| | Abrasion resistance | 100 | 105 | 90 | 93 | 70 | 100 | 105 | 115 | 118 | 123 |

The results in Table 1 show that since a rubber composition can achieve a balanced improvement in grip performance, abrasion resistance, and processability when it contains a rubber component including a styrene-butadiene copolymer (1), a styrene-butadiene copolymer (2), and a hydrogenated terpene aromatic resin, wherein the styrene-butadiene copolymer (1) and the styrene-butadiene copolymer (2) differ in styrene content by 10% by mass or more, a balanced improvement in grip performance and abrasion resistance, particularly on dry roads, was achieved in the tires of the examples including a tread formed from such a rubber composition.

## Claims

**1.** A high performance tire, comprising a tread formed from a rubber composition,
the rubber composition comprising:

a rubber component including a styrene-butadiene copolymer (1);
a styrene-butadiene copolymer (2); and
a hydrogenated terpene aromatic resin,
the styrene-butadiene copolymer (1) and the styrene-butadiene copolymer (2) differing in styrene content by 10% by mass or more.

**2.** The high performance tire according to claim 1,
wherein the styrene-butadiene copolymer (1) is present in an amount of 60% to 100% by mass based on 100% by mass of the rubber component.

**3.** The high performance tire according to claim 1 or 2,
wherein the hydrogenated terpene aromatic resin is present in an amount of 1 to 60 parts by mass per 100 parts by mass of the rubber component.

**4.** The high performance tire according to any one of claims 1 to 3, wherein the hydrogenated terpene aromatic resin has a hydroxyl value of 20 mg KOH/g or less.

**5.** The high performance tire according to any one of claims 1 to 4, wherein the hydrogenated terpene aromatic resin has a degree of hydrogenation of 1% to 100%.

**6.** The high performance tire according to any one of claims 1 to 5, wherein the hydrogenated terpene aromatic resin has a softening point of 116°C to 160°C.

**7.** The high performance tire according to any one of claims 1 to 6, wherein the hydrogenated terpene aromatic resin has a hydroxyl value of 0 mg KOH/g.

**8.** The high performance tire according to any one of claims 1 to 7, which is a high performance dry tire.

Europäisches Patentamt
European Patent Office
Office européen des brevets

# EUROPEAN SEARCH REPORT

Application Number
EP 17 15 5904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 176 001 A1 (SUMITOMO RUBBER IND [JP]) 7 June 2017 (2017-06-07) * paragraph [0046] - paragraph [0047]; examples 2,3,4; table 1 * ----- | 1-8 | INV. C08L9/06 B60C1/00 C08L25/08 C08L93/00 |
| A | EP 1 514 901 A1 (BRIDGESTONE CORP [JP]) 16 March 2005 (2005-03-16) * paragraph [0045]; claims 1-20; tables 5-1,5-2,6-1,6-2,8-1,8-2 * ----- | 1-8 | |
| A | US 2011/213049 A1 (TAKIZAWA YOICHI [JP]) 1 September 2011 (2011-09-01) * paragraph [0025] - paragraph [0026] * ----- | 1-8 | |
| A | EP 2 799 480 A1 (SUMITOMO RUBBER IND [JP]) 5 November 2014 (2014-11-05) * the whole document * ----- | 1-8 | |

TECHNICAL FIELDS SEARCHED (IPC)

C08L
B60C

The present search report has been drawn up for all claims

2

| Place of search | Date of completion of the search | Examiner |
|---|---|---|
| Munich | 30 June 2017 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 17 15 5904

This annex lists the patent family members relating to the patent documents cited in the above-mentioned European search report. The members are as contained in the European Patent Office EDP file on
The European Patent Office is in no way liable for these particulars which are merely given for the purpose of information.

30-06-2017

| Patent document cited in search report | Publication date | Patent family member(s) | Publication date |
|---|---|---|---|
| EP 3176001 A1 | 07-06-2017 | EP 3176001 A1 | 07-06-2017 |
| | | JP 2017101209 A | 08-06-2017 |
| | | US 2017158845 A1 | 08-06-2017 |
| EP 1514901 A1 | 16-03-2005 | EP 1514901 A1 | 16-03-2005 |
| | | US 2006167160 A1 | 27-07-2006 |
| | | WO 2004000931 A1 | 31-12-2003 |
| US 2011213049 A1 | 01-09-2011 | JP 4849176 B2 | 11-01-2012 |
| | | JP 2011178820 A | 15-09-2011 |
| | | US 2011213049 A1 | 01-09-2011 |
| EP 2799480 A1 | 05-11-2014 | CN 104130461 A | 05-11-2014 |
| | | EP 2799480 A1 | 05-11-2014 |
| | | JP 5913188 B2 | 27-04-2016 |
| | | JP 2014214297 A | 17-11-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005350535 A